Europäisches Patentamt

European Patent Office

Office européen des brevets

(11) Publication number: **0 439 860 A2**

# EUROPEAN PATENT APPLICATION

(21) Application number: 90203464.4

(22) Date of filing: **21.12.90**

(51) Int. Cl.5: **C08J 5/12, B29D 23/00,**
**//C08L23:06,C08L21:00**

(30) Priority: **29.12.89 NL 8903179**
**29.12.89 US 456786**
**26.01.90 US 470650**

(43) Date of publication of application:
**07.08.91 Bulletin 91/32**

(84) Designated Contracting States:
**AT BE CH DE DK ES FR GB GR IT LI NL SE**

(71) Applicant: **STAMICARBON B.V.**
**Mijnweg 1**
**NL-6167 AC Geleen(NL)**

(72) Inventor: **Van der Zande, Harold Dick**
**Bachstraat 29**
**NL-6438 KK Oirsbeek(NL)**
Inventor: **Knols, Franciscus Johannes**
**Caeciliastraat 20**
**NL-6413 GM Heerlen(NL)**
Inventor: **Kirschbaum, Robert**
**Vriendenkringstraat 55**
**NL-6141 LH Sittard(NL)**
Inventor: **Karg, Rudolph Fernando**
**3039 Woodland Ridge Boulevard**
**Baton Rouge, LA 70816(US)**

(54) **Hose coated with high molecular weight polyethylene and process for the production thereof.**

(57) The invention relates to a hose of which at least the inside or the outside is coated with a layer of polyethylene bonded direct to an elastomeric layer, which polyethylene has a weight-average molecular weight of more than $0.5 \times 10^6$ kg/kmole and which layer of polyethylene has been obtained by clearing a layer of polyethylene gel of solvent, and also to a process for preparing such a hose.

Possible applications of such a hose are, for instance, those of which the inside and/or the outside of the hose are exposed to the effects of chemical substances and/or of substances with a highly abrasive effect, also at low temperatures.

FIG. 1

# HOSE COATED WITH HIGH MOLECULAR WEIGHT POLYETHYLENE AND PROCESS FOR THE PRODUCTION THEREOF

The invention relates to a hose of which at least the inside or the outside is coated with a layer of polyethylene bonded direct to an elastomeric layer.

Such a hose is known from the French patent specification FR-A-1.567.289. With this hose the polyethylene in the coating has a maximum melt index of 0.15. The said melt index is determined according to ASTM standard 1238-57 T under addition of an extra weight of 3 kg. A melt index of 0.15 determined in this manner corresponds with a weight-average molecular weight, Mw, of about $0.5 \times 10^6$ kg/kmole.

A disadvantage of this hose is the occurrence of fold-shaped accumulations in the polyethylene coating. These folds penetrate into the elastomeric layer, which causes the elastomeric layer to be of uneven thickness, having thinner spots in the places, where the polyethylene layer shows a fold. As a consequence of this unevenness the rigidity of the hose shows variations. The applicability of the hose is reduced by this, because local deviations from the average rigidity in consequence of the greater thickness of the polyethylene layer must be reckoned with. With multi-layer hoses, which frequently contain thin elastomeric layers, the thicker parts of the polyethylene layer may even extend through the adjoining elastomeric layer, which may locally result in a poor adhesion to a layer applied on the other side of the elastomeric layer.

Now, the object of the invention is to provide a hose that does not have said disadvantage, or to a much lower degree.

This is achieved according to the invention in that the polyethylene has a weight-average molecular weight of more than $0.5 \times 10^6$ kg/kmole and that the layer of polyethylene has been obtained by clearing a layer of polyethylene gel of solvent.

In the hose according to the invention the polyethylene coating has surprisingly been found to have a particularly even thickness and in many cases significantly higher adhesive strength to the elastomeric layer.

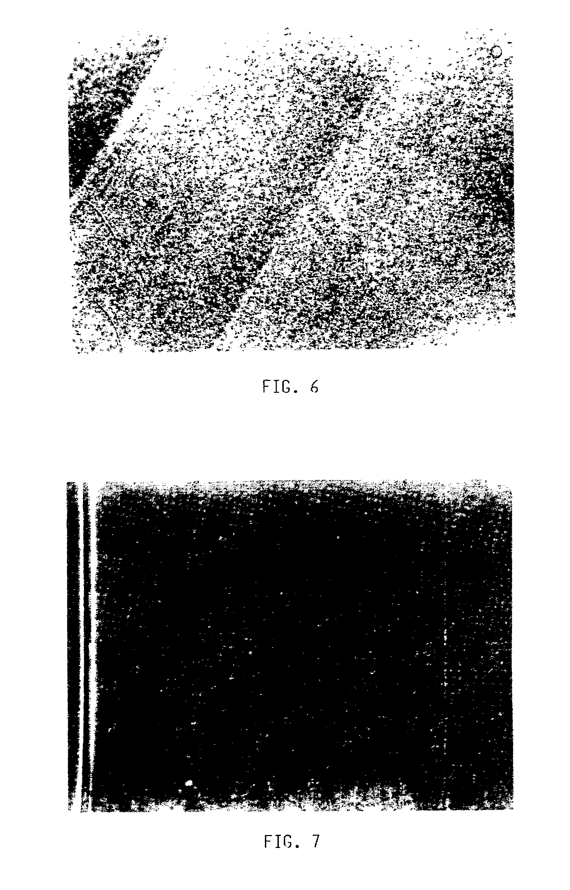

The morphology of the polyethylene layer in the hose obtained according to the invention has been found to differ from that of the hose known in the art. The fact is that by applying transmitted light microscopy it has been shown that a polyethylene layer in the hose according to the invention has a homogeneous structure, unlike the polyethylene layers in the conventional hose, which show a clear powder morphology. A similar difference in morphology is visible on the surface of the polyethylene layer once it has been caused to swell in a solvent. This difference is visualized in figs. 6 and 7, which show the surface of a cross section of a layer of polyethylene, obtained by clearing a gel layer of solvent (fig. 6) and of a layer of melt-crystallized polyethylene (fig. 7). Fig. 6 shows a homogeneous structure and no grain boundaries are visible. In fig. 7 the grain boundaries are clearly visible. The polyethylene layers have been obtained as described in Examples I-VI and Comparative Examples A-E. The pictures have been obtained by transmitted light microscopy with a polarization microscope at a magnification of 160x.

A further advantage of the hose according to the invention is that the adhesion of the polyethylene coating to the elastomeric layer, as well as the mutual adhesion of the parts of the polyethylene coating overlapping each other, is usually stronger than in the case in which a polyethylene coating is used that has not been obtained by clearing a layer of polyethylene gel of solvent.

Also the overlaps in the polyethylene coating in the prior art hose give rise to visible and tangible thickenings, whereas in the hose according to the invention the overlaps are smooth and virtually intangible.

The hose according to the invention may contain more than one of the same and, if its application so requires, also more than one different elastomeric layers, alternating, if so desired, with other layers normally used in hoses such as, for instance, reinforcing layers and barrier layers of materials suited for that purpose, if only the polyethylene coating is bonded direct to an elastomeric layer.

The polyethylene in the hose according to the invention has a weight-average molecular weight of more than $0.5 \times 10^6$ and preferably at least $1.0 \times 10^6$ kg/kmole.

Elastomeric layers in the hose according to the invention preferably contain EP(D)M rubbers and styrene-butadiene copolymers or mixtures of at least one of these elastomers with at least one other elastomer. To the elastomer the usual additives may be added such as, for instance, fillers, plasticizers, stabilizers, colourants, antistatics, lubricating and release agents, flame retardants and substances promoting barrier properties.

The invention also relates to a process for the production of a hose of which at least the inside or the outside is coated with a layer of polyethylene bonded direct to an elastomeric layer.

Such a process is known also from the French patent specification FR-A-1.567.289.

In that process a polyethylene film with a melt index of 0.15 at most is wound spirally round a mandrel with the successive windings partly overlapping one another, followed by the application of an elastomeric layer containing a curing agent and of a sheath closely surrounding the whole of it, upon which the fusion of the overlapping parts of the polyethylene windings and the adhesion of the polyethylene layer and the elastomeric layer to each other take place sinmultaneously with the curing of the elastomeric layer.

A disadvantage of that process is that local fold-shaped accumulations are formed of the polyethylene melted at the curing temperature, which accumulations penetrate into the elastomeric layer. As a consequence, the elastomeric layer will be thinner at these places, because the said sheath restricts the expansion of the whole body enclosed by it. A further disadvantage is that the adhesion of the polyethylene layer to the elastomeric layer in the vicinity of the polyethylene accumulations has been found to be much weaker than in those places where the polyethylene layer and the elastomeric layer are of an even thickness.

The object of the invention also is to provide a process that does not have these disadvantages, or much less so.

This object is achieved according to the invention in that the polyethylene has a weight-average molecular weight of more than $0.5 \times 10^6$ kg/kmole and the polyethylene layer has been obtained by clearing a layer of polyethylene gel of solvent.

In applying the process according to the invention the polyethylene layer has been found to have an even thickness.

A further advantage of the process according to the invention is that the layer of polyethylene gel can be obtained in very small thicknesses, but may further vary also within wide limits, for instance from 0.1 mm to 10 mm, so that the various requirements that may be imposed by various hoses in respect of the thickness of the polyethylene layer, depending on their application, can be complied with. The process according to the invention can be used also for the purpose of applying a polyethylene coating on the outside of a hose. In this case, unlike the process described above, the elastomeric layer is applied round the mandrel first, for instance by extrusion, round which the polyethylene layer is wound afterwards. Also, by applying the various layers round the mandrel in the desired order a hose can be produced provided outside as well as inside with a polyethylene coating.

The process according to the invention can, moreover, be used for producing a hose containing more than one of the same and, if its application so requires, also more than one different elastomeric layers, alternating, if so desired, with other layers frequently used in hoses such as, for instance, reinforcing layers and barrier layers of materials suited for that purpose, if only the polyethylene coating is always applied direct onto an elastomeric layer.

An even further advantage of the process according to the invention is that it can be applied with equally favourable results if previously cured hoses are started from. In that case, for the application of a polyethylene coating on the outside of the hose, the use of a mandrel can be dispensed with if so desired, because the cured hose as such will generally already possess sufficient dimensional stability.

A preferred method to apply the polyethylene film, other than said helically winding, is to install it by folding an oblong polyethylene film in such a manner that its longitudinal edges meet to form a tube with an overlapping seam in its longitudinal direction.

An advantage of using this method of installing the polyethylene film is that the total surface area of the overlapping seams in the polyethylene cladding layer, in particular if the ratio between the width of the overlap and the diameter of the hose is relatively large, that is to say, especially in the case of hoses having a relatively small diameter, is significantly smaller than in the case of the helically winding process, and this commensurately decreases the risk of defects occurring in fusing the seams together and, in addition, results in an appreciable material saving.

It is also an advantage of this method that the conventional equipment for manufacturing hoses can be used as it is or with only minor adaptations.

In this preferred method the width of the polyethylene film is in practice chosen as equal to the inside circumference or outside circumference of the hose to be clad, with the desired width of the overlapping seam added. The width of the overlapping seam is chosen as small as possible without adversely affecting the degree of sealing of said seam and it is even possible, if use is made of polyethylene films having a thickness of more than, for example, 0.3 mm, to use a butt seam. With a view to limiting material usage as far as possible, the width of the overlapping seam is preferably less than 10 mm.

Processes for installing, according to the method described above, a layer of cladding material around an elongated tubular object are known per se, for example, from the Japanese Patent Application JP-A-62/138,230 and the Belgian Patent Application BE-A-878,980, in which a layer of thermoplastic material is installed in the said manner on a metal pipe. In said known processes, the overlapping seam in the folded-

3

round film is first sealed by fusion before the polyethylene layer is processed with the object to be clad to produce a final product. However, this process cannot be used in a continuous process with high production speed if UHMWPE is used as the thermoplastic material, owing to the poor weldability of said material.

In this method, the overlapping seam is not sealed during or immediately following the installation of the polyethylene layer, but this is carried out at the same time as the bonding of the polyethylene layer to the elastomeric layer. Between the installation step and the bonding process the polyethylene layer is held in place by a sheath which is usually installed around it in the manufacture of hoses, for example a lead layer extruded around it if the polyethylene layer is installed on the outside of the hose, and by the elastomeric layer installed around it if the polyethylene layer is installed on the inside of the hose.

In the process according to the invention ultra-high molecular weight linear polyethylene, hereinafter referred to as UHMWPE, is used having a weight-average molecular weight, Mw, of at least $0.5 \times 10^6$ kg/kmole and preferably of at least $1 \times 10^6$ kg/kmole.

The weight-average molecular weight of UHMWPE is determined by applying the processes known for this purpose, such as Gel Permeation Chromatography and Light Scattering, or calculated on the basis of the Intrinsic Viscosity (IV) determined in decalin at $135\,^\circ$C. The said weight-average molecular weights of 0.5 and $1.0 \times 10^6$ kg/kmole correspond with an IV in decalin at $135\,^\circ$C of 5.1, respectively 8.5 dl/g according to the empirical equation of
$$Mw - 5.37 \times 10^4 \, [IV]^{1.37}.$$

UHMWPE is understood in this connection to mean linear polyethylene with fewer than one side chain per 100 carbon atoms and preferably fewer than 1 side chain per 300 carbon atoms and such a polyethylene capable of containing also minor amounts, preferably less than 5 moles %, of one or more other alkenes copolymerized with it, such as propylene, butylene, pentene, hexene, 4-methyl pentene, octene, etc., which polyethylene or copolymer of ethylene has a weihgt-average molecular weight of at least $0.5 \times 10^6$ kg/kmole.

The polyethylene may further contain minor amounts, preferably 25% (wt) at most, of one or more other polymers, particularly an alkene-1 polymer, such as polypropylene, polybutadiene or a copolymer of propylene with a minor amount of ethylene.

Such an UHMWPE can be produced by means of, for instance, a Ziegler or a Phillips process while applying suitable catalysts and under polymerization conditions known in the art.

UHMWPE has a number of properties which make it highly suited as coating on the inside and on the outside of hoses. Such properties are, in particlar, for instance, the high wear resistance, flexural strength, the high resistance against chemicals and the low coefficient of friction and, besides, the high impact resistance and tensile strength.

The polyethylene layer to be bonded, having a Mw of more than $0.5 \times 10^6$ kg/kmole, is obtained by clearing a layer of polyethylene gel of solvent.

Processes for obtaining such a layer of UHMWPE gel are known per se from GB-A-2.164.897, EP-A-64.167 and EP-A-141.418, in which processes are described for obtaining a film-shaped UHMWPE gel by extruding or pouring out a diluted UHMWPE solution in the desired shape, followed by the rapid cooling of the resulting film-shaped article consisting of the solution, in which process a film-shaped layer of UHMWPE gel is formed, hereinafter referred to as gel film.

This gel film, obtainable as intermediate product in the said processes, is highly suited to be used after drying as polyethylene layer in the process according to the invention.

In that case the gel film preferably has a thickness of between 0.1 and 10 mm, particularly between 0.5 and 3 mm. In conjunction with the concentration of the polyethylene in the solution used, this thickness is so chosen that the thickness of the final dried gel film is between 0.05 and 5 mm, preferably between 0.1 and 2 mm.

In the said processes, the UHMWPE concentrations in the solutions from which the layers of polyethylene gel are formed may be between 0.5 and 40% (wt). Solutions with a concentration of more than 40% (wt) are more difficult to handle because of their high viscosity, particularly with high molecular weights, but within the scope of the process according to the invention it is, however, also possible to use layers of polyethylene gel formed from solutions with an UHMWPE concentration of up to about 60% (wt) or higher.

According to the said processes the solvent is removed by evaporation, by compressing the gel film or by passing the gel film through a liquid bath containing an extractant for the solvent, upon which the gel film, having been cleared of solvent, is dried.

From the said processes it is known also how to produce thinner polyethylene layers, to about 1 μm, by stretching the gel film before or during the removal of the solvent, or the dried gel film after removal of the solvent, into at least one direction. Such drawn films, too, can be used as UHMWPE layers in the process according to the invention.

Direct or drawn under the above-mentioned conditions, porous UHMWPE layers, too, can be used in all sorts of thicknesses as polyethylene layers to be bonded in the process according to the invention. Processes for obtaining a porous film-shaped polyethylene layer from a gel film are known per se, for instance from European patent application EP-A-160.551.

Such a wide variety of obtainable thicknesses of the polyethylene layer cannot be realized in a different way, or only with great difficulty, for instance via ram extrusion, by the compression of UHMWPE powder above the melting point of the polyethylene or by peeling off a thin layer from an article obtained by ram extrusion or compression, and then always at high production costs.

The mechanical properties of an UHMWPE layer obtained from a gel film by the removal of the solvent have been found to differ from those of a layer obtained via a different route, for instance ram extrusion or the moulding of a normally obtainable UHMWPE powder above the melting point of the polyethylene.

Although the polyethylene layers obtained from a gel are highly brittle and therefore do not seem to be suited for the coating of hoses, it has, however, surprisingly been found that the polyethylene layer in the hose thus formed again possesses the normal toughness and the other said excellent mechanical and chemical properties characteristic of UHMWPE. It has further been found that in the process according to the invention a strong adhesion takes place between the polyethylene and the elastomer, as well as between the overlapping parts of the polyethylene layer mutually, and it has, moreover, been found that the overlapping parts have so flowed out as to form an almost perfectly flat and completely smooth surface.

An elastomer within the scope of the invention is defined as a substance which at room temperature can be stretched to twice its original length and which, after removal of the tensile load, will forcibly and in a short time return to approximately its original length (see the Glossary of Terms as issued by the D11 ASTM Committee on Rubber and Rubber-like Materials).

The elastomers used in the production of the hose according to the invention may be any elastomeric material known in the art such as, for instance, natural rubber (NR), copolymers of butadiene and acrylonitrile (NBR), butadiene-styrene copolymers (SBR), copolymers of butadiene and alkyl acrylates, butyl rubber, olefin rubbers such as ethylene-propylene and EPDM rubber, fluorocarbon rubber, silicone rubber, polyacrylates, polybutadiene and polychloroprene.

The elastomeric layers used in the production of the hose according to the invention are preferably EP-(D)M rubbers and styrene-butadiene copolymers or mixtures of at least one of these elastomers with at least one other elastomer. A polyethylene layer, that has not been obtained by clearing a layer of polyethylene gel of solvent, has appeared not to adhere at all to a layer of NBR. Surprisingly, even in this case a polyethylene film obtained according to the invention shows sufficient adhesion to this elastomeric layer to produce a usable hose. To the elastomers the usual additives can be added, such as, for instance, fillers, plasticizers, stabilizers, colourants, antistatics, lubricating and release agents, flame retardants and substances promoting barrier properties.

An important step in the production of the hose according to the process is the mutual adhesion of the parts of the polyethylene layer overlapping each other and the adhesion of the polyethylene coating to the elastomeric layer. Both adhesion processes must take place at a temperature above the melting point of the polyethylene and under enough pressure.

In order to obtain a proper adhesion of the overlapping parts of the polyethylene layer applied, as well as of the polyethylene layer to the elastomeric layer, proceeding from a previously cured hose, the process conditions are as follows.

The temperature must be above the the melting point of the polyethylene used, but must, however, be chosen as low as possible in order to minimize thermal degradation of the polyethylene. Generally, the melting point of polyethylene with a Mw higher than $0.5 \times 10^6$ kg/kmole is between about $130^\circ$ C and $160^\circ$ C. The pressure may range between 0.2 and 10 MPa, preferably between 0.4 and 1 MPa. These conditions must be maintained for a period of at least 30 to 600 seconds, depending, inter alia, on the thickness of the polyethylene layer applied. The time required in each concrete case can easily be determined by experiment by the average person skilled in the art.

The said process conditions are such that also if a hose is used that is yet to be cured, the process conditions required for the curing can usually be chosen without objection and without coming into conflict with the process conditions required for obtaining a proper adhesion of the overlapping parts of the polyethylene layer with each other and between the polyethylene layer and the elastomeric layer. The fact is that the curing process of elastomers usually takes place in temperature and pressure ranges of respectively $120\text{-}180^\circ$ C and above 0.2 MPa for 10 to 30 minutes. An important variable is the activation temperature and the curing rate of the curing agent or curing system used. It is therefore usually possible to bring the process conditions of the curing process in line with those of the two adhesion processes

EP 0 439 860 A2

mentioned.

If for a specific combination of the elastomer used in the hose and the curing system the process conditions required for the curing are such that there is a risk of degradation of the polyethylene layer to be applied, preference is given to first curing the hose without the polyethylene coating applied thereon and subsequently applying the polyethylene layer on the previously cured hose under the required process conditions described above. This may be necessary, for instance, if the hose contains thick elastomeric layers requiring long curing times.

Possible applications of the hose according to the invention are, for instance, those of which the inside and/or the outside of the hose are exposed to the effects of chemical substances and/or of substances with a highly abrasive effect, also at low temperatures.

The invention is elucidated by means of the following examples without, however, being limited thereto.

The values mentioned in the examples for the 180° peeling test have been determined according to DIN standard 53530 on test specimens 12.5 mm wide and 100 mm long at a peeling rate of 100 mm/min.

Examples I-VI

Hoses, each comprising an elastomeric layer, clad with a polyethylene layer that had been obtained by clearing a layer of polyethylene gel of solvent were manufactured. The process is described below, the processing conditions and the experimental results are shown in table 1.

A linear polyethylene with an IV in decalin of 15.5 at 135°C, corresponding with a weight-average molecular weight Mw of $2.2 \times 10^6$ kg/kmole (Himont 312$^R$), was dissolved in decalin to a concentration of 20% (wt) to form a homogeneous solution by extruding such a mixture of polyethylene and decalin at a temperature of 180°C using a twin-screw extruder. The extruder head was provided with a wide die with an extrusion slit of 1 mm through which the solution was extruded to form a tape, which was cooled in a water bath kept at 20°C, in which process a gel film was formed. The gel film thus obtained was cleared of decalin by evaporation in an air oven until no residual decalin content could be measured any more.

The dried gel film, which was about 65 mm wide and about 0.5 mm thick, was wound spirally round a 40-cm-long mandrel, the overlap of a winding over the preceding winding being about 10-15 mm.

All around, a layer of an uncured, sulphur-curable elastomer was applied having a thickness of about 3-5 mm. In order to obtain enough pressure and to prevent the rubber from flowing out during the next curing step an 0.4-mm-thick layer of nylon fabric was applied round the rubber layer.

The whole of it was placed in a steam autoclave, the adhesion between the polyethylene layer and the rubber layer and the mutual adhesion between the overlapping parts of the polyethylene windings being effected simultaneously with the curing of the rubber. After the cooling of the hose in the ambient air, the nylon fabric was removed. The autoclave temperature and the curing time are given in Table 1.

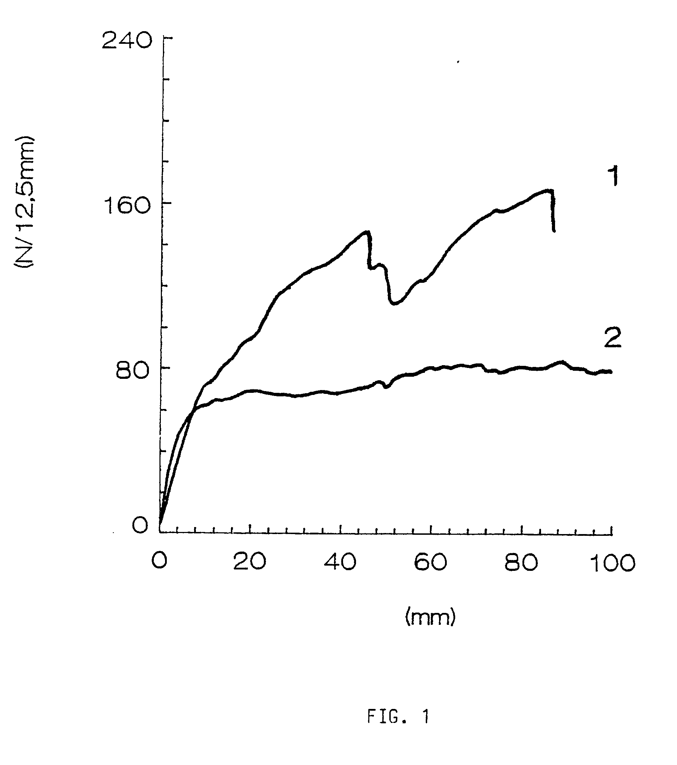

The cured, polyethylene-coated hose was cut open in lengthwise direction. During a visual inspection, the polyethylene layer proved to be perfectly smooth and not to show any visible irregularities either on the overlapping windings. Fig. 2 shows a photograph of an overlap in the hose of Example V. The strength of the adhesion of the polyethylene layer to the rubber layer was determined by means of the peeling test according to DIN 53530. The maximum peeling strength is shown in Table 1. It can be noted that this maximal strength can vary considerably depending on the type of elastomer used. In many cases the adhesive strength between the elastomeric layer and the polyethylene layer appears to be stronger than the internal cohesion of the elastomeric layer, causing the elastomeric layer to fail rather than the bonding between the polyethylene and the elastomeric layer. In Table 1 by 'adhesive' or 'cohesive' the actual type of failure is indicated. For the hose of Example I the result of this peeling test is shown by the curve marked '1' in fig. 1, the clamp displacement in mm being plotted along the horizontal axis and the peeling strength in N/12.5 mm along the vertical axis. It is to be noted that the rubber layer collapses before the polyethylene layer becomes detached from the rubber layer, so that the adhesive strength is at least 160 N/12.5 mm.

Comparative examples A-F

For comparison the above procedure was repeated, the difference being that, instead of a dried gel film, a layer of melt-crystallized UHMWPE was used as the UHMWPE layer on which the adhesive strength to the various elastomeric layers was determined. This layer was produced by compressing in a flat press at a temperature of 200°C, so well above the melting point of the polyethylene, the same UHMWPE as in Example I, first for 2 minutes under a pressure of 0.1 MPa and successively for 5 minutes under a pressure of 1 MPa. The chosen amount of UHMWPE was such that the resulting UHMWPE film was about 5 mm

6

thick. From this 5-mm-thick layer an 0.5-mm-thick film was obtained by skiving.

According to the process of Examples I-VI a layer of melt-crystallized polyethylene, a layer of the corresponding elastomer and a layer of nylon fabric were applied round a mandrel and the whole of it was cured.

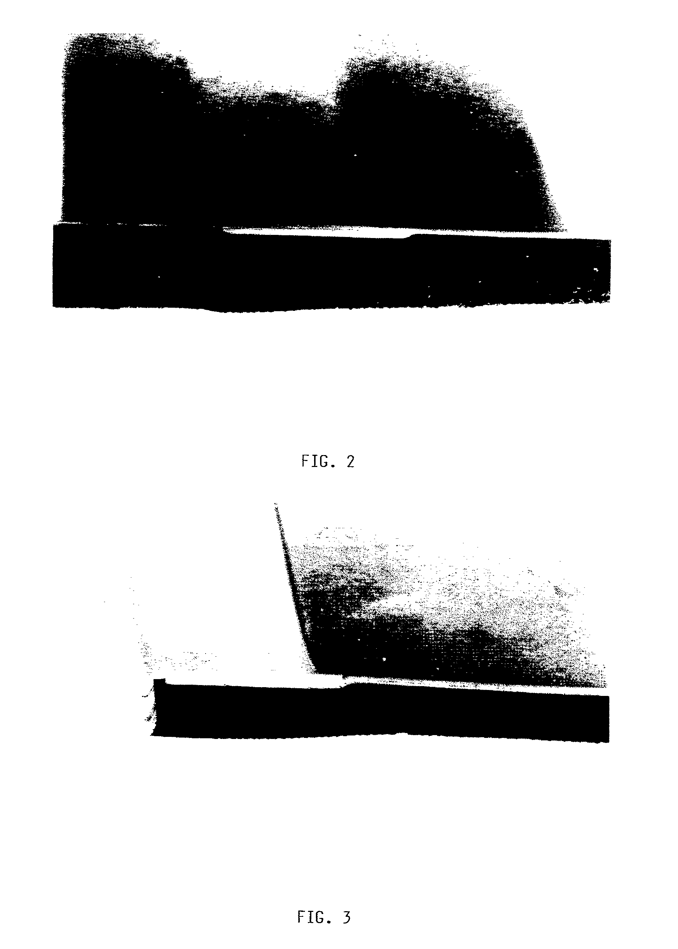

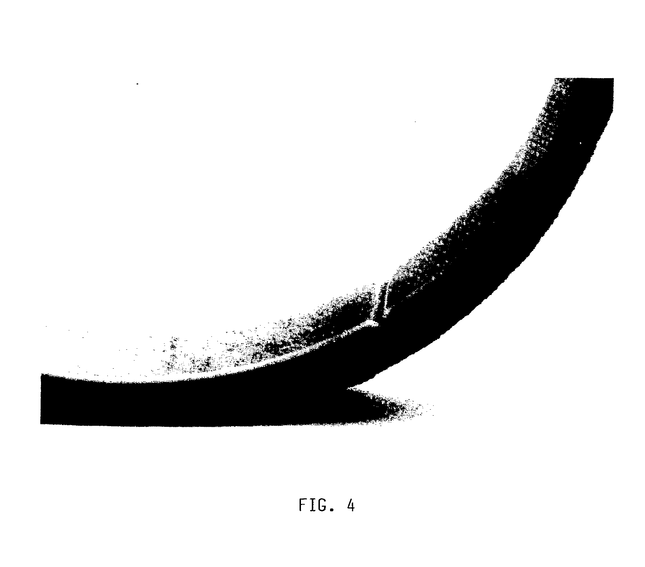

During a visual inspection after cutting open the cured hose, irregularities in the thickness of the polyethylene layer and fused folds were ascertained. Fig. 3 is a photograph of an overlap in the hose of Comparative Example E, showing a notch, that helically continues throughout the hose. After the hose had been cut through at these irregularities, it was found that the polyethylene layer had penetrated into the rubber layer. Fig. 4 shows a photograph of a fold, penetrating into the rubber layer of the hose of Comparative Example E. The strength of the adhesion of the polyethylene layer to the rubber was determined by means of the peeling test according to DIN 53530. Table 2 shows the results for the hoses, clad with the skived polyethylene layer, to be compared with the corresponding results in Table 1. For the hose of Comparative Example A the result of the peeling test is shown in fig. 1 by the curve marked '2'. From this curve it can be concluded that the adhesive strength is only about 80 N/12.5 mm at most. In this experiment the polyethylene layer and the rubber layer were separated from each other (adhesive failure).

## Table 1

### Examples I-VI

| ex. | elastomer | curing temp. °C | time min | max. peel-strength N/12.5 mm | failure mode | seams | folds |
|---|---|---|---|---|---|---|---|
| I | SBR | 160 | 20 | 160 | ad/cohesive | no | no |
| II | SBR | 160 | 30 | 125 | ad/cohesive | no | no |
| III | SBR | 150 | 45 | 75 | ad/cohesive | no | no |
| IV | NR | 150 | 45 | 185 | cohesive | no | no |
| V | EPDM | 150 | 45 | 75 | cohesive | no | no |
| VI | NBR | 150 | 45 | 12 | adhesive | no | no |

### Comparative examples A-F

| ex. | elastomer | curing temp. °C | time min | max. peel-strength N/12.5 mm | failure mode | seams | folds |
|---|---|---|---|---|---|---|---|
| A | SBR | 160 | 20 | 80 | adhesive | yes | yes |
| B | SBR | 160 | 30 | 65 | adhesive | yes | yes |
| C | SBR | 150 | 45 | 45 | adhesive | yes | yes |
| D | NR | 150 | 45 | 185 | cohesive | yes | yes |
| E | EPDM | 150 | 45 | 75 | cohesive | yes | yes |
| F | NBR | 150 | 45 | 0[*] | adhesive | yes | yes |

[*] no adhesion between the layers at all.

Example VII

By the same process as in Examples I-VI of the same UHMWPE a dried gelfilm of approximately 0.3 mm thick and 10 cm wide was obtained from a gelfilm prepared by extrusion of a 15% by weight solution through a 0.5 mm wide slit.

An unvulcanized hose was manufactured by first extruding a layer of an unvulcanized NBR mixture around a flexible round mandrel, braiding the former with steel wire and extruding a layer of an unvulcanized SBR/NBR mixture around the latter. The total diameter of the hose was approximately 3 cm.

The unvulcanized hose obtained was fed into a lead sheathing machine, in which process the above described polyethylene film was folded round the hose at the beginning of the hose and was secured at that point. As the hose was fed into the sheathing machine, the polyethylene film was fed in at the same time and, without further measures being found to be necessary during this feeding-in, folded round to form a polyethylene tube having overlapping longitudinal edges around the hose in the conical opening of the sheathing machine, after which a lead sheath was installed around the whole in the machine for the purpose of the subsequent vulcanization process. The width of the overlapping seam formed during folding round was approximately 4 mm.

The unvulcanized hose, provided with a lead sheath, was wound onto a reel and vulcanized for approximately 25 minutes at a temperature of 160°C. After removing the lead sheath, the vulcanized hose was removed from the mandrel. The polyethylene layer on the hose had a flat and smooth surface in which the overlapping seam was hardly still visible.

Two cuts were made continuously in the circumferential direction with a mutual spacing of 12.5 mm in the polyethylene layer on the hose, then the circumferential element was cut in the longitudinal direction of the hose, after which one end thereof was clamped in the clamp of a pulling bench and the hose was pushed around a metal rod which was fixed with respect to the base of the pulling bench. The polyethylene layer of the hose was peeled off by moving the uppermost clamp of the pulling bench upwards with a speed of 100 mm/minute, it being possible for the hose to rotate freely around the rod. As the polyethylene layer was peeled off the rubber layer bonded thereto, the polyethylene layer did not release the rubber layer but the rubber layer was pulled apart.

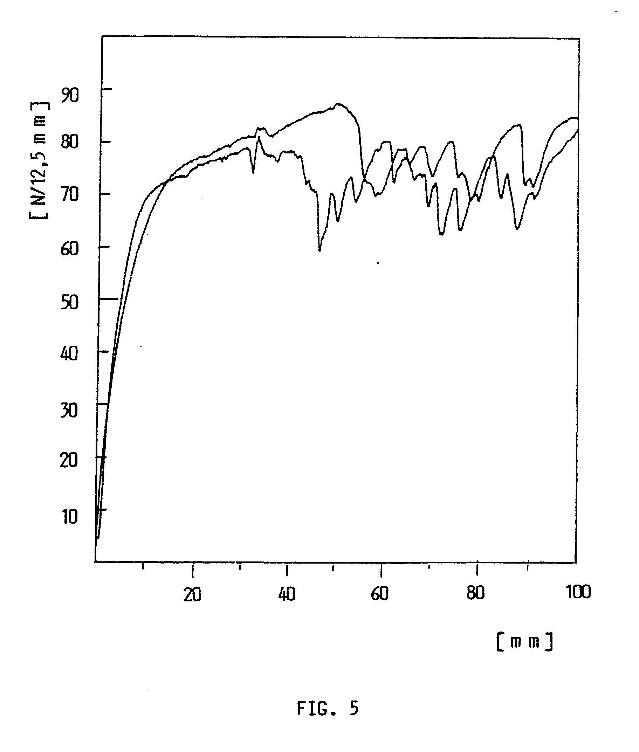

The force necessary for the peeling-off is shown in Figure 5, plotted against the clamp displacement, the 2 curves corresponding to 2 separate tests.

The flexibility of the hose clad with the polyethylene layer differs only slightly from that of a hose which, apart from the installation of the polyethylene layer, was manufactured in an otherwise identical manner. No delamination occurred between the polyethylene layer and the rubber layer during prolonged and repeated bending of the hose.

**Claims**

1. Hose of which at least the inside or the outside is coated with a layer of polyethylene bonded direct to an elastomeric layer, characterized in that the polyethylene has a weight-average molecular weight of more than $0.5 \times 10^6$ kg/kmole and that the layer of polyethylene has been obtained by clearing a layer of polyethylene gel of solvent.

2. Hose according to claim 1, characterized in that the weight-average molecular weight of the polyethylene is at least $1 \times 10^6$ kg/kmole.

3. Hose according to claim 1 or 2, characterized in that the elastomeric layer consists of an EP(D)M rubber or a styrene-butadiene copolymer or a mixture of at least one of these elastomers with at least one other elastomer.

4. Process for preparing a hose of which at least the inside or the outside is coated with a layer of polyethylene bonded direct to an elastomeric layer, characterized in that the polyethylene has a weight-average molecular weight of more than $0.5 \times 10^6$ kg/kmole and that the layer of polyethylene has been obtained by clearing a layer of polyethylene gel of solvent.

5. Process according to claim 4, characterized in that the weight-average molecular weight of the polyethylene is at least $1 \times 10^6$ kg/kmole.

6. Process according to claim 4 or 5, characterized in that the elastomeric layer is cured.

7. Process according to any one of claims 4-6, characterized in that the elastomeric layer consists of an EP(D)M rubber or a styrene-butadiene copolymer or a mixture of at least one of these elastomers with at least one other elastomer.

8. Process as described in substance and/or further elucidated by means of the examples and/or drawing.

9. Hose as described in substance and/or further elucidated by means of the examples and/or drawing.

FIG. 1

FIG. 2

FIG. 3

FIG. 4

FIG. 5

FIG. 6

FIG. 7